# EUROPEAN PATENT APPLICATION

(11) **EP 0 808 658 A1**
(43) Date of publication of application: **26.11.1997**
(21) Application number: 97107641.9
(22) Date of filing: 09.05.1997
(51) Int. Cl.: B03B 1/00, B09B 3/00, B03B 9/06

(54) **Process and plant for the disposal and recycling of waste**

(30) Priority: 22.05.1996 IT TO960436
(71) Applicant: Delprino, Giovanni, 28041 Arona (IT); Cirio, Massimo, 10129 Torino (IT)
(72) Inventor: Massimo, Cirio, 10129 Torino (IT)

(57) **Abstract**

The present invention refers to a process and relative plant for the disposal and recycling of waste, both of urban and industrial origins. The process and plants are based on cryogenic technology, that is on the principle of putting waste into contact with a cryogenic fluid, with the aim of weakening, separating and reducing in volume the waste to be disposed of and recycled. The process is intrinsically non-polluting, it permits the elimination and also the recycling of treated waste in the form of fertilisers, fuel, or as industrial material.

## Description

This invention refers to a process and plant for the disposal and recycling of waste.

Current well known methods of waste disposal make use of incinerators in which the waste is burnt and refuses disposal sites where the refuse is covered with earth.

Apart from involving great expense due to the type of fuel used, the use of incinerators is a source of atmospheric pollution, due to the fumes generated by combustion. On the other hand, the use of refuse disposal sites is a source of environmental pollution both for the subsoil and for water.

Moreover, neither method allows efficient recycling of waste material.

The technical problem that the present invention seeks to resolve is that of disposing of and recycling waste without burning any fuel, without polluting the environment and a very low cost.

The present invention resolves this problem of waste disposal and recycling by placing the waste in contact with a cryogenic fluid.

According to a further characteristic of the present invention, the waste is first immersed in the cryogenic fluid and then mechanically broken into small pieces after being removed from the said fluid, so that it can then be recycled.

Both this and other characteristics of the present invention will be clarified in the following example of just one of the preferred ways of disposing of waste. This is only one example, and not the only possible process.

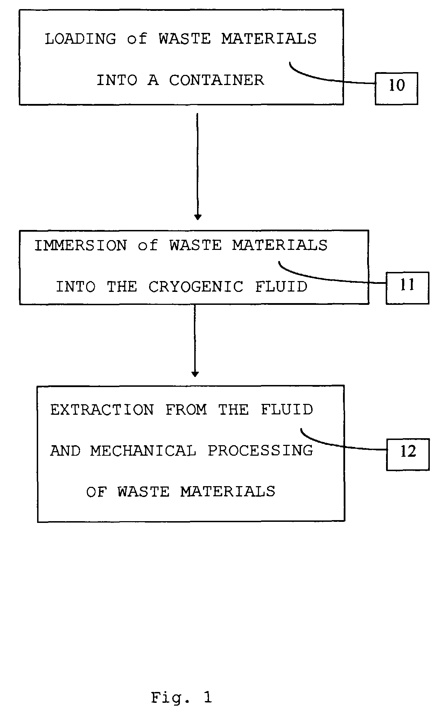

Explanatory diagrams are enclosed; fig.1 represents a flow diagram of a process of waste disposal according to the present invention.

In order to obtain the results described above, the process according to the present invention is based on the principle of putting the waste or composite materials into contact with a liquid gas whose boiling temperature is equal to, or inferior to -35°C.

To this end, the product which has to be treated is immersed in a cryogenic fluid at a temperature between -35 and -273°C and it undergoes rapid cooling which generates a reduction of the intermolecular forces and also often a reduction in volume.

This reduction in volume, in the case of composite products, is proportional to the different coefficients of specific thermic expansion and causes the cracking of the various substrates, thereby facilitating the mechanical separation of the components of the product.

In the case of natural or unmixed products, the reduction of volume renders the mass of the product very fragile at the first mechanical treatment.

However, when immersed in a cryogenic liquid, the waste undergoes a thermic shock which prevents it from forming dangerous by-products as a result of undesired chemical reactions.

For the purpose of this invention, any fluid which has a boiling temperature of under -35°C may be used as a cryogenic fluid. Examples of some of these fluids and their respective boiling temperatures can be found in the following table.

| Cryogenic fluid | Boiling temperatures |
|---|---|
| Carbon dioxide | - 78 °C |
| Nitrogen | -196 °C |
| Argon | -185 °C |
| Helium | -268 °C |
| Neon | -246 °C |
| Krypton | -152 °C |
| Xenon | -177 °C |
| Liquid air | -194 °C |

Each of these fluids has the following positive characteristics: it is not combustible, inflammable or explosive, it does not support combustion and it is neither toxic nor corrosive.

Obviously combustible cryogenic fluids such as methane may be used as an alternative, provided the necessary precautions are taken.

We will now describe a plant used for the treatment and recycling of waste according to the present invention
The plant consists of a super-insulated, high-vacuum reservoir tank for cryogenic liquids, a processing tank or tunnel in which the products to be treated can be immersed and a container or a basket to be immersed in the processing tank or tunnel.

The tunnel or processing tank should preferably be constructed in stainless steel with a thickness which can vary between 0.4 and 0.8 mm and it should be welded in a way which will ensure its resistance to the various thermic shocks to which it is subjected.

The shape of the tunnel or processing tank will depend on the dimensions and the quantity of waste to be treated, in order to optimise the consumption of the cryogenic fluid contained therein, the latter being both the fundamental and also the most expensive element on which the process is based.

Obviously, in order to limit evaporation causing further consumption of the cryogenic fluid, the tunnel or processing tank can be thermically insulated.

The high-vacuum reservoir tank and the processing tank are connected to each other by piping which is provided with a system of pumps and valves which render it possible to regulate the flow of the cryogenic liquid from the reservoir tank to the processing tank and viceversa.

The basket, also preferably constructed in stainless steel can be introduced into and extracted from the processing tank and it is provided with a number of holes which permit the flow and backflow of the cryogenic liquid.

We will now describe the process for the disposal of organic materials using a plant of the type described above.

With reference to Fig.1 the first stage 10 consists of loading the waste to be disposed of into a container or basket.

The second stage 11 consists of immersing the basket containing the waste into the processing tank containing the cryogenic fluid. During this stage 11 a violent evaporation of the cryogenic fluid takes place, followed by loud crackling due to the thermic shock to which the waste has been subjected. This phenomenon persists for about 10-15 seconds after which the cryogenic fluid boils less violently due to the cooling and weakening effect to which the waste has been subjected. The ebullition is due to the considerable thermic gradient existing between the cryogenic fluid and the waste; when the gradient diminishes, that is, the temperature of the waste inclines towards the temperature of the cryogenic fluid, the phenomenon of ebullition disappears.

In the third stage 12, at the termination of ebullition, the basket can be removed from the processing tank and the waste, now weakened, can be in turn extracted from the basket and mechanically processed.

The mechanical operations can be of various types, for example it is possible to fragment, press and pack the processed waste into bags for subsequent use in the form of fertiliser or fuel.

We will now describe the process for the disposal of refuse containing toxic substances, for example asbestos.

Obviously, considering the delicacy of the operation due to the volatility of asbestos, every possible precaution must be taken, including ventilation and filtering systems in the work area, as well as the distribution of protective masks for the people involved in working on the process.

Initially the articles manufactured of, or containing asbestos are immersed in an additional tank, containing a watery solution with the aim of limiting the volatility of the superficial particles of the asbestos. Then the asbestos is mechanically transported to the processing tank where it is immersed in the cryogenic fluid.

After a few seconds, depending on the consistency and physical dimensions of the manufactured article, this is moved towards a stage of mechanical processing. In this stage it is possible to separate metal or plastic parts that perhaps form a part of the manufacture, by using pneumatic chisellers, or hammers in the form of needles.

Subsequently, the body of asbestos which is maintained at a low temperature by the recycling of the vapours from the cryogenic fluid, is reduced in dimension and encapsulated in specific watertight containers. The metal or plastic parts which have been mechanically separated can be recycled. The water discharged from the additional tank is purified in a system formed by an automatic module which functions by means of gravitation force linked to a filtering mechanism.

Finally, we are going to describe the process used for the disposal and recycling of products such as used tyres, electrical cables to be recuperated, car bodies to be descaled, industrial products, etc.

During the first stage the products will be triturated in order to reduce their dimension as, often, the size of such products can create difficulties in handling if not reduced.

The products are then conveyed to a tunnel or processing tank where the action of the cryogenic fluid weakens the molecular reticule as previously described.

A further stage follows in which the individual components of the original products are separated. In this stage, a series of mechanical actions are carried out, these being percussion-pressure-friction which act upon the product, causing a rough separation, for example of the rubber from the fabric and metallic structure which form the framework of the tyre; or, in the case of the cables, creating the separation of the plastic insulator from the copper wire.

Each individual component of the product can then be reallocated to different industrial sectors relevant to their possible reuse; for example the rubber scraps can be reduced to a powder for further use mixed with asphalt.

Provided that the process according to the present invention is based on cryogenic technology, any plant can have structural and functional plans which may be different from those previously described depending on the level of automation required.

For example the plant for the treatment of refuse can be in the form of a tunnel fitted with devices which spray cryogenic fluid onto the refuse passing through it.

In fact, the fundamental characteristics on which this invention is based are as follows: the use of cryogenic fluid which permits rapid cooling with consequent weakening of the waste thus treated; this as a consequence simplifies the process of destruction, breaking up or separation of the products, as well as the elimination of micro-organisms and enzymes.

## Claims

1. Process for the disposal and recycling of waste characterised by the fact that this waste is put into contact with a cryogenic fluid.

2. Process according to claim 1, characterised by the fact that this cryogenic fluid has a temperature inferior or equal to -35°C.

3. Process according to claim 1 or 2, characterised by the fact that this cryogenic fluid is chosen from one of the following fluids: carbon dioxide, nitrogen, argon, helium, neon, (krypton) xenon, liquid air or mixtures of the same.

4. Process according to claim 1, characterised by the fact that the waste is manipulated mechanically after being separated from the said cryogenic fluid.

5. Plant for the disposal and recycling of waste, characterised by processing tank capable of containing a cryogenic fluid, and by equipment suitable for putting the waste into contact with the cryogenic fluid.

6. Plant according to claim 5, characterised by the fact that there is a reservoir tank stocking cryogenic fluid which is connected to the said processing tank.

7. Plant according to claim 5 or 6, characterised by equipment suitable for mechanically treating the waste after it has been removed from the said cryogenic fluid.

8. Plant according to claim 5 or 6, characterised by the fact that preparation and recuperation equipment is provided before and after processing in the said processing tank.

9. Plant for the disposal and recycling of waste, characterised by equipment capable of putting the waste into contact with the said cryogenic liquid.

10. Plant according to claim 9, characterised by a reservoir tank connected to the said equipment, this tank being capable of stocking the said cryogenic fluid.

11. Plant according to claim 9 or 10, characterised by equipment capable of mechanically treating the waste after it has been removed from the said cryogenic fluid.
